(19) **Europäisches Patentamt / European Patent Office / Office européen des brevets**

(11) **EP 3 095 548 A1**

(12) **EUROPEAN PATENT APPLICATION**
published in accordance with Art. 153(4) EPC

(43) Date of publication:
**23.11.2016 Bulletin 2016/47**

(21) Application number: **14879130.4**

(22) Date of filing: **17.01.2014**

(51) Int Cl.:
***B23K 26/21*** (2014.01)

(86) International application number:
**PCT/JP2014/050731**

(87) International publication number:
**WO 2015/107664 (23.07.2015 Gazette 2015/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Hitachi, Ltd.**
**Chiyoda-ku**
**Tokyo 100-8280 (JP)**

(72) Inventors:
• **ZHANG, Xudong**
  **Tokyo 100-8280 (JP)**
• **AOTA, Kinya**
  **Tokyo 100-8280 (JP)**
• **MIYAGI, Masanori**
  **Tokyo 100-8280 (JP)**

(74) Representative: **Beetz & Partner mbB**
**Patentanwälte**
**Steinsdorfstraße 10**
**80538 München (DE)**

(54) **LASER WELDING METHOD AND WELDED JOINT**

(57)  An object of the present invention is to reduce spatter generation by stabilizing a keyhole in a laser welding method. A welded joint in which a plurality of workpieces are welded by irradiation with a laser beam, wherein the following formulae 1 to 3 are satisfied, $b/a \geqq 0.6$ --- (formula 1), $h/d \geqq 1.0$ --- (formula 2), and $h/a < 3.0$ --- (formula 3), where a is a surface width of a weld bead formed across the plurality of workpieces, h is a maximum penetration depth of the weld bead, b is a penetration width of the weld bead at a position where a penetration depth of the weld bead is h/2, and d is the penetration depth at a center position of the weld bead.

FIG. 1

## Description

{Technical Field}

The present invention relates to a laser welding method and a welded joint.

{Background Art}

Laser welding is used in various fields, because energy density of a laser beam as a heat source is high so as to obtain a welded joint of low distortion, high speed and high precision. In the automotive field, there are many products in which a plurality of workpieces are welded by overlapping or butting them with steel materials such as stainless steels and carbon steels, or metal materials such as aluminum alloys and nickel alloys. A welding process using a continuous wave or pulsed wave laser beam is used for producing, for example, a vehicle body, a fuel pump and an injector (a fuel injection valve).

Further, a joining device or process for joining a resin material by a laser beam has been developed and used to produce products such as stress/strain sensors and air flow sensors using a non-metallic material such as a resin.

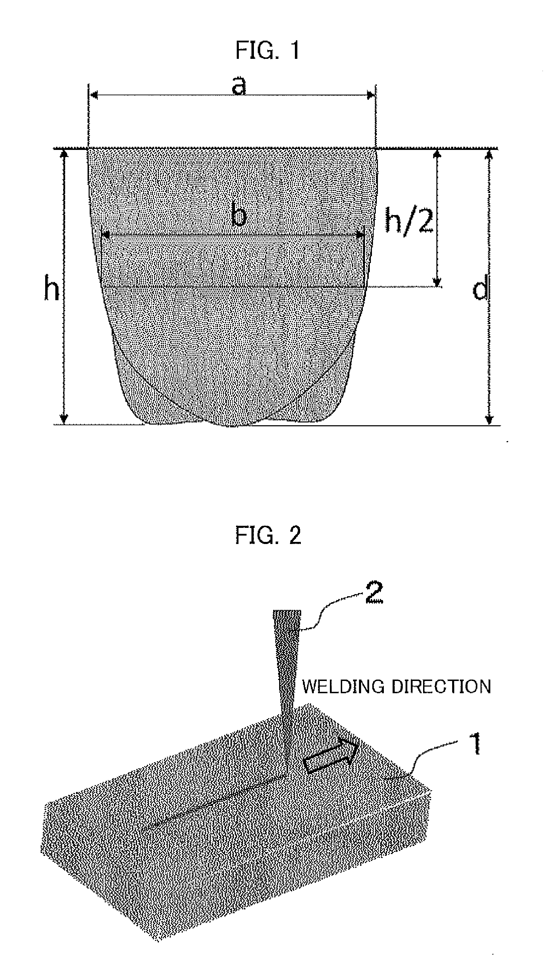

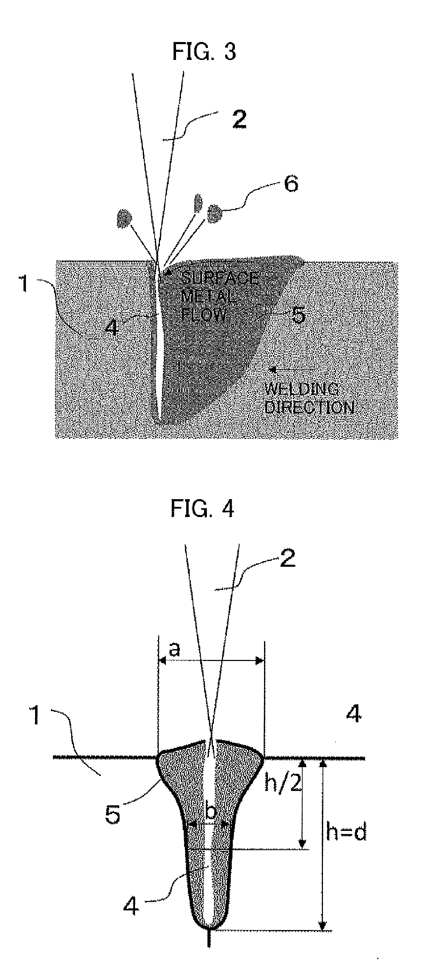

The laser welding generally uses a deep penetration type (keyhole mode) welding method. In this method, when power density (laser power per unit area) of the laser beam irradiated to a surface of the workpiece is equal to $10^6$ W/cm$^2$ or more, temperature of a surface of the metal is equal to or higher than a boiling point of the metal, metal vapor violently jumps out from a laser irradiation point along with generation of plasma, the surface of the molten metal is recessed by reaction force of the metal vapor, and the laser beam enters the metal while repeating reflection in a recessed portion, to perform deep narrow keyhole mode welding. Theoretically, it is possible to form a laser keyhole by maintaining a balance between a pressure of the metal vapor inside the keyhole and a surface tension and static pressure of the molten metal around the keyhole. However, as shown in FIG. 2, since the welding is performed while a laser beam 2 irradiated to a workpiece 1 moves in a welding direction, it is necessary to continuously advance the keyhole in a welding process. Meanwhile, since a molten pool also flows dynamically, it is difficult to stabilize keyhole shape. FIG. 3 shows a cross-sectional view of the molten pool and the laser keyhole in the laser welding. Reference sign 1 is the workpiece, and reference sign 2 is the laser beam. In a vicinity of an opening of a keyhole 4, a surface of a molten pool 5 generally flows outwardly from the keyhole 4. However, as shown in FIG. 3, when the pressure inside the keyhole is rapidly reduced, or when the surface tension changes, the flow momentarily goes in a reverse direction (the molten metal flows toward the keyhole) in some cases. In particular, since the keyhole exists mainly in front of the molten pool with respect to the welding direction, and the molten metal in front of the keyhole is very small, hydrostatic pressure and surface tension of the molten pool behind the keyhole is power to close the keyhole. In response to such surface flow of the molten pool, the opening of the keyhole suddenly becomes narrow at a rear thereof, the laser beam is irradiated vertically to the surface of the molten pool, the molten metal is intensely vaporized, and spatters 6 are generated. As shown in FIG. 4, in conventional deep penetration type laser welding, wine-cup shaped weld bead having a surface width "a" much larger than a penetration width "b" is easily formed. This is because heat of high temperature metal vapor (plasma) blowing out from the keyhole 4 is transferred to the surface of the metal, and has an effect of expanding the surface of the molten pool 5. Further, the molten pool around the keyhole is pushed out from the keyhole by blowout of the metal vapor, and thus the molten metal flows outwardly. By these two effects, the wine-cup shaped weld bead, in which the penetration width "b" inside the bead is narrow and about half of the surface width "a", is obtained after welding. Further, the keyhole itself formed by laser beam irradiation repeats expansion and contraction, and is very unstable. The metal vapor is filled inside the keyhole, however, air or shielding gas used to prevent oxidation of the molten metal is sometimes involved therein. The air or shielding gas involved in the metal vapor forms a bubble in the molten pool, and is trapped by a solidification wall, resulting in porosity. In order to prevent porosity caused by instability of the keyhole as described above, it is possible to reduce porosity by stabilizing the keyhole using a pulsed laser beam set with an appropriate pulse width or frequency. However, although it is possible to stabilize the keyhole during laser irradiation when using the pulsed laser beam, there is a possibility that the opening of the keyhole is fully closed during interruption of irradiation, and spatters are intensely generated. In recent years, research and development of laser processing technology using a scanner for oscillating the laser beam has been promoted. This method is intended to control beam spot diameter of a processing point while rotating the laser beam at high speed.

For example, Patent Document 1 discloses a device and a method for adjusting laser beam spot diameter, which can adjust the laser beam spot diameter, in particular, can enlarge the diameter by using a scanner of the laser beam.

{Citation List}

{Patent Literature}

{Patent Document 1}
Japanese Patent Application Publication No. 2012-152822

{Summary of Invention}

{Technical Problem}

However, the device and the method for adjusting the laser beam spot diameter described in Patent Document 1 has a problem that since the laser beam spot diameter is enlarged, an evaporation area of the molten metal is increased at a moment when the laser beam is irradiated to the surface of the molten pool, and a size of the spatter is increased.

An object of the present invention is to reduce spatter generation caused by instability of the keyhole.

{Solution to Problem}

The above object is achieved by the present invention described in claims.

{Advantageous Effects of Invention}

According to the present invention, it is possible to reduce spatter generation caused by instability of the keyhole.

{Brief Description of Drawings}

FIG. 1 is a view showing a cross-sectional shape of a weld bead as viewed from a welding direction in an embodiment 1 of the present invention;
FIG. 2 is a view showing a laser welding method of the prior art;
FIG. 3 is a view showing a spatter generation mechanism in the laser welding method of the prior art;
FIG. 4 is a view showing a cross-sectional shape of a weld bead as viewed from a welding direction in the prior art;
FIG. 5 is a view showing a scanner laser welding method in the embodiment 1 of the present invention;
FIG. 6 is a view showing a cross-sectional shape of a keyhole and molten pool in the embodiment 1 of the present invention;
FIG. 7 is a view showing a cross-sectional shape of the keyhole and molten pool as viewed from the welding direction in the embodiment 1 of the present invention;
FIG. 8 is a view showing a cross-sectional shape of a weld bead as viewed from a welding direction in an embodiment 2 of the present invention;
FIG. 9 is a view showing a relationship between number of repetitions of beam rotation and number of spatters in the embodiment 1 of the present invention; and
FIG. 10 is a view showing a relationship between a beam rotation diameter and the number of spatters in the embodiment 1 of the present invention.

{Description of Embodiments}

Hereinafter, embodiments of the present invention will be described in detail.

[Embodiment 1]

A welding method of the present embodiment is as follows. A welded joint produced by the welding method of the present embodiment is, for example, a lap joint of stainless steel having a thickness of 1.0 mm.

In the present embodiment, for example, a fiber laser having a wavelength of 1070 to 1080 nm can be used, but a laser beam of another wavelength may be used. Further, the laser beam is generated from a laser oscillator (not shown), and is condensed by a beam scanner and a condenser lens (not shown) through a transport channel, to be irradiated to a surface of the lap joint of stainless steel.

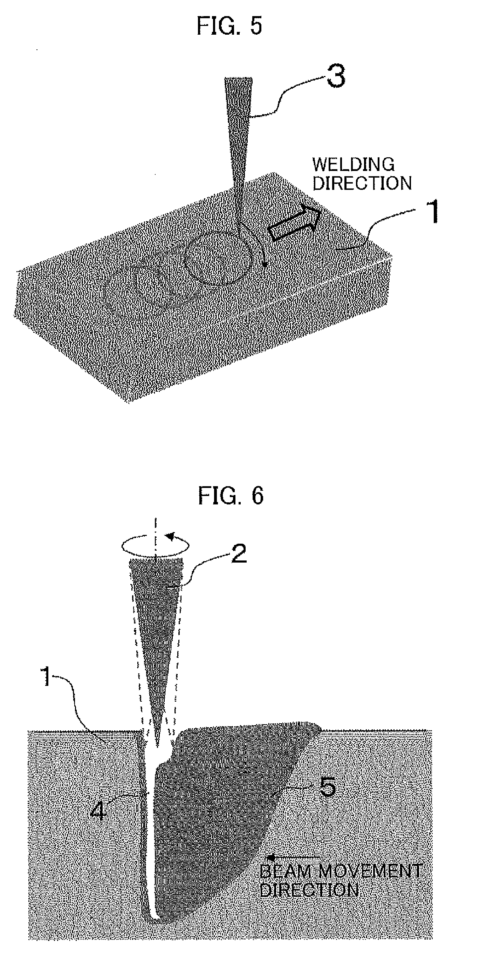

FIG. 5 shows a schematic view of laser welding using the beam scanner. A laser beam 3 is irradiated to a workpiece 1 while being rotated using the beam scanner. While repeating laser beam irradiation only during drawing of a circle using a pulsed laser beam, a laser welding head including the beam scanner is advanced in a welding direction, to generate an irradiation trajectory such as shown in FIG. 5. The laser beam may be continuously irradiated instead of being pulsed. The point is that instead of simply tracing connection portions of a plurality of workpieces, the laser beam only have to trace the connection portions of the workpieces while being rotated so as to draw circles on the connection portions with a laser beam tip.

In order to prevent oxidation of the molten metal, deep penetration type laser welding of the present embodiment can use nitrogen as a shielding gas. Note that, the shielding gas is not limited to nitrogen, and Ar (argon), He (helium) or a mixture thereof may be used.

As welding conditions, for example, laser power is 200 W to 1000 W, beam spot diameter is 0.04 mm to 0.2 mm, number of repetitions of beam rotation 60 Hz to 500 Hz, and beam rotation diameter is 3.0 mm or less. In addition, it can be appropriately set such that welding speed is 10 mm/s to 100 mm/s, and flow rate of shielding gas is 5.0 l/min to 30.0 l/min.

Hereinafter, a keyhole, molten pool behavior and bead shape after welding under the welding conditions used in the present embodiment will be described with reference to FIGS. 1, 6 and 7.

FIG. 1] is a view showing a cross-sectional shape of a weld bead as viewed from the welding direction. As viewed from the welding direction, a surface width of the weld bead (molten pool) is a, a penetration depth at a central portion of the weld bead is d, a maximum penetration depth of the weld bead is h, and a penetration width at a position where the penetration depth is h/2 is b. Both a depth of the keyhole and the maximum penetration depth of the weld bead are the depth from a surface of the workpiece 1. The same reference numerals show the same positions also in the following figures.

FIG. 6 shows a cross-sectional shape of the keyhole and molten pool in a process of advancing the laser beam in the welding direction while rotating the beam at a high speed. Since a tip of a laser beam 2 draws a circle, the keyhole is also formed outside a center of the beam, and thus it is possible to form the molten pool having a surface width "a" larger than that of a conventional welding method in which the beam is not rotated.

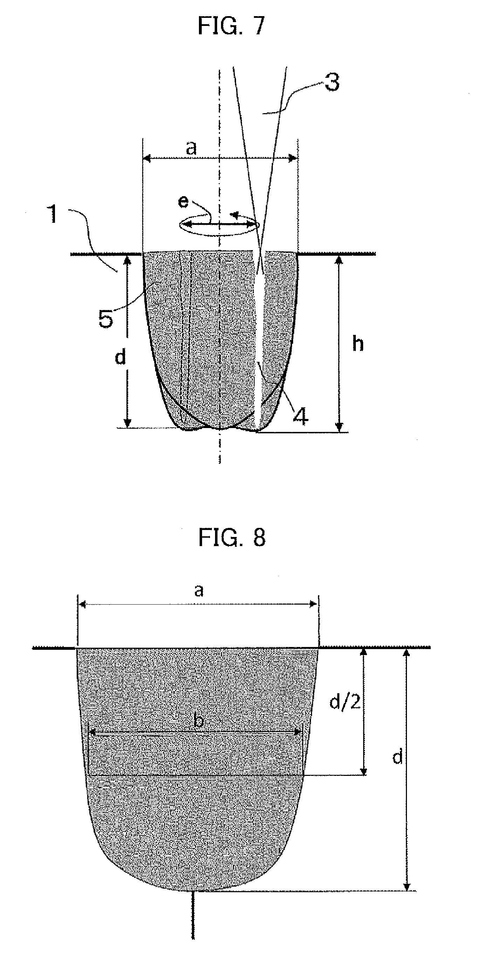

FIG. 7 shows a cross-sectional shape of the keyhole and molten pool as viewed from the welding direction. Here, the depth of a keyhole 4 is the same as the maximum penetration depth h of the molten pool. That is, the depth of the keyhole 4 is equal to the maximum penetration depth of the molten pool. Since the laser beam 3 is advanced in the welding direction while being rotated at the high speed, a rotation diameter (distance between the keyholes) of the keyhole is equal to a beam rotation diameter e, and a position where the molten pool is deepest is a position shifted by e/2 outwardly from a center of the molten pool. Further, when a beam rotation speed is very high, for example, the beam rotation diameter is 2.0 mm, rotation frequency is 100 Hz, and a scanner speed of the beam is 600 mm/s or more, the beam rotation speed is twelve times forward speed (welding speed) of the laser beam in the welding direction. As a result, as shown in FIG. 7, the cross-sectional shape of the molten pool taken along a direction perpendicular to the welding direction is convex downward at two positions spaced outwardly from a center of a bottom of the molten pool.

Further, since the rotation speed of the laser beam is much faster than the forward speed in the welding direction, it is possible to reduce an amount of the molten pool in front of the keyhole with respect to a direction (spiral direction of a combination of a linear welding direction and a rotation direction) of movement of the laser beam, and thus the surface width "a" of the molten pool is not much wider than the rotation diameter of the keyhole. That is, width variation from the surface to the bottom of the molten pool is smaller than that of the conventional welding method.

Further, since the rotation speed of the laser beam is very high, a time that the molten pool behind the keyhole flows back to an opening of the keyhole is short, and the opening is hardly closed. Further, since the keyhole does not move linearly but moves rotationally with respect to a traveling direction of the laser beam, the molten pool also flows in accordance with a rotation direction of the keyhole. However, a flow of the molten pool stays for a certain time due to its inertia, and receives stirring effect of the keyhole formed by irradiation with the laser beam. As a result, a concave is formed in the opening of the keyhole in a rearward direction of movement of the keyhole, and it is possible to avoid direct irradiation of the laser beam to a surface of the molten pool and to directly irradiate the laser beam to a lower portion of the keyhole, thereby preventing intense vaporization of the molten metal around the opening of the keyhole, and thereby preventing spatter generation.

In particular, shape of the weld bead welded under the welding conditions of the present embodiment is such that (i) when the maximum penetration depth of the weld bead cross section is h, a relationship between the surface width "a" of the weld bead and the penetration width "b" at the position where the penetration depth is h/2 is b/a > 0.6, (ii) a relationship between the maximum penetration depth h and the penetration depth d at a center position of the weld bead is h/d > 1.0, and (iii) a relationship between the bead surface width "a" and the maximum penetration depth h of the weld bead cross section is h/a < 3.0.

[Comparative example]

As a comparative example, welding is performed using the conventional welding method which does not use the beam scanner. Material and size of a test piece used in a welding test is the same as that used in Embodiment 1. The welding conditions are as follows: the laser power is 200 W to 1000 W; the beam spot diameter is 0.04 mm to 0.2 mm; the welding speed is 10 mm/s to 100 mm/s; and the flow rate of the shielding gas is 5.0 l/min to 30.0 l/min.

An example of a cross-sectional shape of the bead welded under the welding conditions described above is shown in FIG. 4. The weld bead shape is such that the surface width "a" is at least twice the penetration width "b", a position where the penetration depth is deepest is the central portion of the weld bead, and the weld bead has a wine cup shape. Further, a large amount of spatter is generated in a welding process.

[Embodiment 2]

The welding method of the present embodiment is as follows. A lap welded joint according to the present embodiment is, for example, a butt joint (not shown) of copper plate having a thickness of 1.0 mm.

In a laser welding of the present embodiment, for example, a visible light and near-infrared laser having a wavelength of 500 nm to 880 nm can be used, but a laser beam of another wavelength may also be used. Further, the laser beam is generated from the laser oscillator (not shown), and is condensed by the beam scanner and the condenser lens (not shown) through the transport channel, to be irradiated to a surface of the butt joint of copper plate described above.

As with the welding method shown in Embodiment 1, while rotating the laser beam using the beam scanner, the welding is performed by advancing the laser welding head including the beam scanner in the welding direction. Further, in order to prevent oxidation of the molten metal, it is possible to use Ar (argon) as the shielding gas. Note that, the shielding gas is not limited to Ar, and He (helium) or a mixture thereof may be used.

As welding conditions, for example, the laser power is 200 W to 800 W, the beam spot diameter is 0.04 mm to 0.2 mm, the number of repetitions of beam rotation is 300 Hz to 1000 Hz, and the beam rotation diameter is 0.2 mm to 3.0 mm. In addition, it can be appropriately set such that the welding speed is 10 mm/s to 100 mm/s, and the flow rate of the shielding gas is 5.0 l/min to 30.0 l/min.

FIG. 8 shows a cross-sectional shape of the bead welded under the welding conditions described above. (i) The penetration depth d at the center position of the weld bead is deepest (d = h), and the relationship between the surface width "a" of the weld bead and the penetration width "b" at the position where the penetration depth is h/2 is b/a ≧ 0.6, (ii) the relationship between the maximum penetration depth h and the penetration depth d at the center position of the weld bead is h/d = 1.0, and (iii) the relationship between the bead surface width "a" and the maximum penetration depth h of the weld bead cross section is h/a < 3.0.

Further, spatter generation is not observed during the welding.

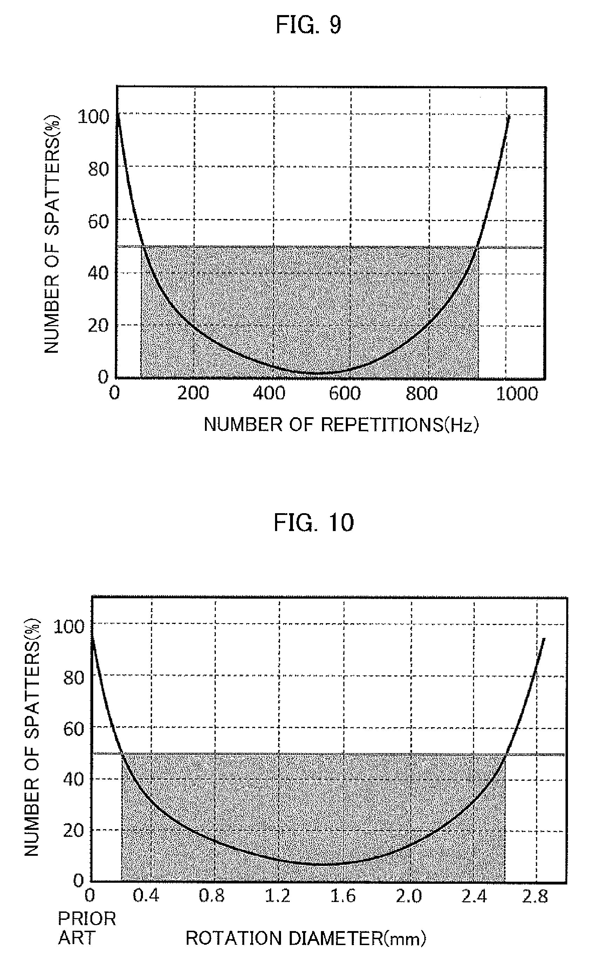

A summary of the above results is shown in FIGS. 9 and 10. FIG. 9 shows a relationship between the number of repetitions (frequency) of beam rotation and the number of spatter generations. FIG. 10 shows a relationship between the beam rotation diameter and the number of spatter generations. From the figures, when the frequency of beam rotation is 60Hz to 900Hz, and the beam rotation diameter is 0.2 mm to 2.6mm, it is found that it is possible to halve the number of spatters than that of the conventional method.

{Reference Signs List}

1:    workpiece (base material)
2:    laser beam
3:    laser beam
4:    keyhole
5:    molten pool (weld bead)
6:    spatter

**Claims**

**1.** A welded joint in which a plurality of workpieces are welded by irradiation with a laser beam, wherein the following formulae 1 to 3 are satisfied,

$$b/a \geqq 0.6 \text{ --- (formula 1)}$$

$$h/d \geqq 1.0 \text{ --- (formula 2)}$$

$$h/a < 3.0 \text{ --- (formula 3)}$$

where a is a surface width of a weld bead formed across the plurality of workpieces, h is a maximum penetration depth of the weld bead, b is a penetration width of the weld bead at a position where a penetration depth of the weld bead is h/2, and d is the penetration depth at a center position of the weld bead.

**2.** The welded joint according to claim 1, wherein the weld bead includes downward convex portions having the maximum penetration depth on both outer sides of the center position of the weld bead.

**3.** A laser welding method in which a plurality of workpieces are welded by irradiating a laser beam to a connecting portion of the plurality of workpieces to vaporize metal surface of the workpieces,
wherein the plurality of workpieces are welded while rotating a tip of the laser beam irradiated to the plurality of workpieces.

**4.** The laser welding method according to claim 3, wherein a beam rotation frequency of the laser beam is 60Hz to 900 Hz, and a beam rotation diameter is 0.2 mm to 2.6 mm.

**Amended claims under Art. 19.1 PCT**

**1.** A welded joint in which a plurality of workpieces are welded by irradiation with a laser beam, wherein the following formulae 1 to 3 are satisfied,

$$b/a \geqq 0.6 \text{ --- (formula 1)}$$

$$h/d \geqq 1.0 \text{ --- (formula 2)}$$

$$h/a < 3.0 \text{ --- (formula 3)}$$

where a is a surface width of a weld bead formed across the plurality of workpieces, h is a maximum penetration depth of the weld bead, b is a penetration width of the weld bead at a position where a penetration depth of the weld bead is h/2, and d is the penetration depth at a center position of the weld bead.

**2.** The welded joint according to claim 1, wherein the weld bead includes downward convex portions having the maximum penetration depth on both outer sides of the center position of the weld bead.

**3.** (Amended) A laser welding method in which a plurality of workpieces are welded by irradiating a laser beam to a connecting portion of the plurality of workpieces to vaporize metal surface of the workpieces, wherein the following formulae 1 to 3 are satisfied,

$$b/a \geqq 0.6 \text{ --- (formula 1)}$$

$$h/d \geqq 1.0 \text{ --- (formula 2)}$$

$$h/a < 3.0 \text{ --- (formula 3)}$$

where a is a surface width of a weld bead formed by welding the plurality of workpieces while rotating a tip of the laser beam irradiated to the plurality of workpieces, h is a maximum penetration depth of the weld bead, b is a penetration width of the weld bead at a position where a penetration depth of the weld bead is h/2, and d is the penetration depth at a center position of the weld bead.

**4.** The laser welding method according to claim 3, wherein a beam rotation frequency of the laser beam is 60Hz to 900 Hz, and a beam rotation diameter is 0.2 mm to 2.6 mm.

**Statement under Art. 19.1 PCT**

1. Contents of amendments
Claim 3 is limited to a welding method for forming a certain shape of a weld bead. Claim 3 is amended based on description in paragraph [0024].

# FIG. 1

# FIG. 2

## FIG. 3

1, 2, 4, 5, 6

SURFACE METAL FLOW

WELDING DIRECTION

## FIG. 4

1, 2, 4, 5

a

b

h/2

h=d

## FIG. 5

## FIG. 6

## FIG. 7

## FIG. 8

## FIG. 9

## FIG. 10

**EP 3 095 548 A1**

| INTERNATIONAL SEARCH REPORT | International application No. |
|---|---|
| | PCT/JP2014/050731 |

**A. CLASSIFICATION OF SUBJECT MATTER**
*B23K26/21*(2014.01)i

According to International Patent Classification (IPC) or to both national classification and IPC

**B. FIELDS SEARCHED**

Minimum documentation searched (classification system followed by classification symbols)
B23K26/21

Documentation searched other than minimum documentation to the extent that such documents are included in the fields searched
Jitsuyo Shinan Koho         1922–1996   Jitsuyo Shinan Toroku Koho   1996–2014
Kokai Jitsuyo Shinan Koho   1971–2014   Toroku Jitsuyo Shinan Koho   1994–2014

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2012-135794 A  (Suzuki Motor Corp.), 19 July 2012 (19.07.2012), paragraph [0023] & US 2012/0160815 A1   & DE 102011089146 A & CN 102528284 A | 1-2 |
| A | JP 2007-319878 A  (Mitsubishi Heavy Industries, Ltd.), 13 December 2007 (13.12.2007), entire text; all drawings (Family: none) | 1-2 |
| A | WO 2002/066197 A1  (Toyota Motor Corp.), 29 August 2002 (29.08.2002), entire text; all drawings & US 2003/0150842 A1   & DE 10290217 T | 1-2 |

☒ Further documents are listed in the continuation of Box C.     ☐ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 25 March, 2014 (25.03.14) | 08 April, 2014 (08.04.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
|---|
| PCT/JP2014/050731 |

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2001-030089 A  (Sumitomo Electric Industries, Ltd.), 06 February 2001 (06.02.2001), entire text; all drawings & US 6410882 B1 | 1-2 |
| A | JP 11-156579 A  (Amada Co., Ltd.), 15 June 1999 (15.06.1999), entire text; all drawings (Family: none) | 1-2 |

Form PCT/ISA/210 (continuation of second sheet) (July 2009)

<table>
<tr><td>**INTERNATIONAL SEARCH REPORT**</td><td>International application No.<br>PCT/JP2014/050731</td></tr>
</table>

**Box No. II        Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III        Observations where unity of invention is lacking (Continuation of item 3 of first sheet)**

This International Searching Authority found multiple inventions in this international application, as follows:
      See extra sheet.

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☒ No required additional search fees were timely paid by the applicant.   Consequently, this international search report is restricted to the invention first mentioned in the claims; it is covered by claims Nos.:
      1-2

**Remark on Protest**        ☐ The additional search fees were accompanied by the applicant's protest and, where applicable, the payment of a protest fee.

        ☐ The additional search fees were accompanied by the applicant's protest but the applicable protest fee was not paid within the time limit specified in the invitation.

        ☐ No protest accompanied the payment of additional search fees.

Form PCT/ISA/210 (continuation of first sheet (2)) (July 2009)

**INTERNATIONAL SEARCH REPORT**

International application No.

PCT/JP2014/050731

Continuation of Box No.III of continuation of first sheet(2)

Claim 1 and claim 3 have a common technical feature "that a plurality of materials to be welded are welded by being irradiated with a laser beam."

However, the above-said technical feature cannot be considered to be a special technical feature, since the technical feature does not make a contribution over the prior art in the light of the contents disclosed in the document 1 (JP 2012-135794 A (Suzuki Motor Corp.), 19 July 2012 (19.07.2012), paragraph [0023] & US 2012/0160815 A1 & DE 102011089146 A & CN 102528284 A).

On the other hand, since claim 3 only states "that while the end of the laser beam is being rotated," the diameter of the rotation can be understood to take any value, and thus the method of claim 3 cannot be said to be suitable to obtain the welded joint according to claim 1.

Further, there is no other same or corresponding special technical feature between these inventions.

Accordingly, claims are classified into two inventions each of which has a special technical feature indicated below.
(Invention 1) claims 1-2
A welded joint which satisfies Equations 1 to 3 below:
$b/a \geq 0.6$... (Equation 1),
$h/d \geq 1.0$... (Equation 2), and
$h/a < 3.0$... (Equation 3),
where "a" is the surface width of a weld bead formed across a plurality of members; "h" is the maximum depth of fusion of the weld bead; "b" is the width of fusion of the weld bead at $h/2$ of the depth of fusion of the weld bead; and "d" is the depth of fusion at the center of the weld bead.
(Invention 2) claims 3-4
A laser welding method for welding a plurality of materials to be welded by irradiating a connection between the plurality of materials to be welded with a laser beam so as to evaporate the metal surface of the materials being welded, the method being adapted to weld the plurality of materials to be welded while rotating the end of the laser beam that irradiates the plurality of materials to be welded.

Claims 3-4 are not relevant to inventions which involve all of the matters to define the invention in claim 1 and which have a same category.

Further, as a result of the search which has been carried out with respect to claims classified into Invention 1, claims 3-4 are not relevant to inventions on which it is substantially possible to carry out a search without an additional prior-art search and judgment, and there is no other reason for that it can be considered that it is efficient to carry out a search on claims 3-4 together with claims 1-2, and consequently, it is impossible to classify claims 3-4 into Invention 1.

Form PCT/ISA/210 (extra sheet) (July 2009)

**EP 3 095 548 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012152822 A